# EUROPÄISCHE PATENTSCHRIFT

(11) **EP 0 527 465 B1**
(45) Veröffentlichungstag und Bekanntmachung des Hinweises auf die Patenterteilung: **18.12.1996**
(21) Anmeldenummer: 92113635.4
(22) Anmeldetag: 10.08.1992
(51) Int. Cl.: C02F 11/12, B01D 29/05, B01D 29/72, B01D 29/68

(54) **Schlammentwässerungssystem**
Sludge dewatering system
Système pour l'assàchement des boues

(30) Priorität: 10.08.1991 DE 4126528
(43) Veröffentlichungstag der Anmeldung: 17.02.1993
(73) Patentinhaber: Weikmann, Günther, D-89257 Illertissen (DE)
(72) Erfinder: Weikmann, Günther, D-89257 Illertissen (DE)
(74) Vertreter: Fiener, Josef

(56) Entgegenhaltungen:
- EP-A- 0 105 183
- WO-A-87/05005
- AT-A- 376 642
- DE-A- 3 231 186
- FR-A- 1 171 902
- FR-A- 2 439 036
- US-A- 3 617 543

## Beschreibung

Die Erfindung betrifft ein Schlammentwässerungssystem gemäß den oberbegrifflichen Merkmalen des Patentanspruches 1.

In jüngster Zeit werden immer größere Anstrengungen gemacht, anfallenden Müll und Sondermüll möglichst umweitschonend zu beseitigen oder - was vorzuziehen ist - den Anfall von vornherein zu verringern. Ein typisches Gebiet ist das der Waschanlagen, insbesondere für Fahrzeuge. Hier gehen die Bestrebungen dahin, die benötigten großen Wassermengen dadurch zu reduzieren, daß in einem möglichst geschlossenen System das Abwasser nach Reinigung zur Wiederverwendung zurückgeführt wird.

Allerdings fällt bei derartigen Waschanlagen nicht nur Abwasser an, sondern auch ein erheblicher Teil an Feststoffen, der sich als Schlamm niederschlägt und mit hohen Kosten als Sondermüll beseitigt werden muß. Die Kosten lassen sich verringern, wenn es gelingt, dem Schlamm soviel Wasser zu entziehen, daß eine stichfeste Masse zurückbleibt.

Hierzu ist es aus der EP 0 436 090 A1 bekannt, unterhalb der eigentlichen Waschstation ein Sandfangbecken anzuordnen. Aus diesem kann mit einer speziellen Schlammpumpe der Schlamm in einen Entwässerungscontainer gepumpt werden, wie er beispielsweise aus der AT-PS 329 476 oder der DE 37 00 471 A1 bekannt ist. In diesem läßt man die Feststoffe sich absetzen und pumpt die sich darüber ansammelnde Flüssigkeit ab, die normalerweise in das Abwassersystem geleitet wird. Da mit dieser Flüssigkeit die normalerweise leichteren organischen Produkte, wie Öl, Fett oder dergleichen mit abgezogen werden, bleibt schließlich eine stichfeste Masse zurück, die in den meisten Fällen als Normalmüll beseitigt werden kann.

Ein gattungsgemäßes System zur Schlammentwässerung ist aus der DE-A-3 231 186 bekannt.

Nachteilig ist bei einem derartigem System, daß ein verhältnismäßig großer Container und eine verhältnismäßig lange Zeit (Verweildauer) wegen der langsamen Schwerkraftabscheidung erforderlich ist, um das Absetzen der Feststoffe zu ermöglichen. Zudem neigen die dort verwendeten Entwässerungssiebe oder Filtereinsätze zum Verstopfen.

Aus der EP-A-105 183 oder US-A-3 617 543 oder FR-A-1 171 902 sind zwar zur Erhöhung der Trennwirkung Vibrationseinrichtungen bekannt, die jedoch unmittelbar im Filterkuchen oder Schlamm eingesetzt werden. Ein Auswechseln ist somit aufwendig und umständlich.

Der Erfindung liegt deshalb die Aufgabe zugrunde, ein Schlammentwässerungssystem anzugeben, das wesentlich effizienter und verstopfungsfreier arbeitet, sowie einfach auswechselbar ist.

Das erfindungsgemäße System besitzt die Merkmale des Patentanspruchs 1.

Bevorzugte Weiterbildungen der Erfindung sind in den abhängigen Ansprüchen gekennzeichnet.

Die Anordnung der erfindungsgemäßen Vibratorvorrichtung an einer Containerseitenwand ermöglicht eine äußerst rasche Entwässerung des Schlamms, so daß der Container verhältnismäßig klein bemessen sein kann und die Verweildauer gering ist. Durch die Vibrationsbeaufschlagung wird somit nicht nur der Schlamm in Schwingungen versetzt, sondern auch die Filtertafel, so daß sich diese nicht zusetzen kann.

Das bei der Entwässerung anfallende Wasser wird vorzugsweise in den Waschkreislauf zurückgeführt und nach Absaugen aus dem unteren Teil des Zwischenraums hinter der Filtertafel auch teilweise zur Reinigung des Filters verwendet, so daß eine wesentlich kleinere Filterfläche erforderlich ist und ein höherer Reinigungsgrad aufgrund der Verwendung feinporigerer Filtermittel erzielt wird. Die Druckbesprühung oder -beaufschlagung verhindert ein Verblocken des Filters.

Weitere Merkmale und Vorteile ergeben sich aus folgender Beschreibung eines Ausführungsbeispiels anhand der Zeichnungen. Es zeigen:
- Fig. 1: eine schematische Seitenansicht eines bei der Erfindung verwendeten Containers;
- Fig. 2: eine Ansicht des Containers nach Fig. 1 von vorn;
- Fig. 3a,b: eine Draufsicht bzw. Seitenansicht einer in Zusammenhang mit der Erfindung verwendeten Filtertafel;
- Fig. 4a,b: Einzelheiten bezüglich der Halterung der Filtertafel nach Fig. 3a und 3b, und
- Fig. 5: schematisch eine Anordnung zur Wiederverwendung des abgezogenen Wassers.

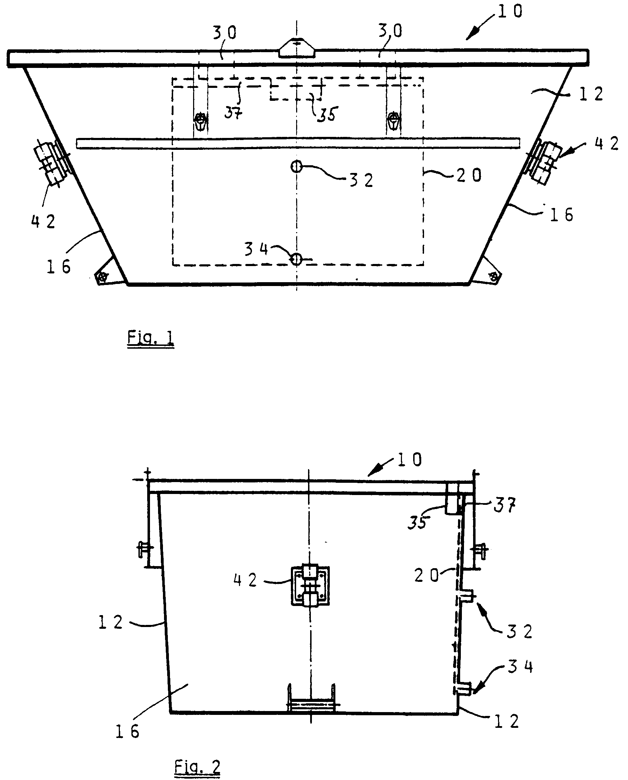

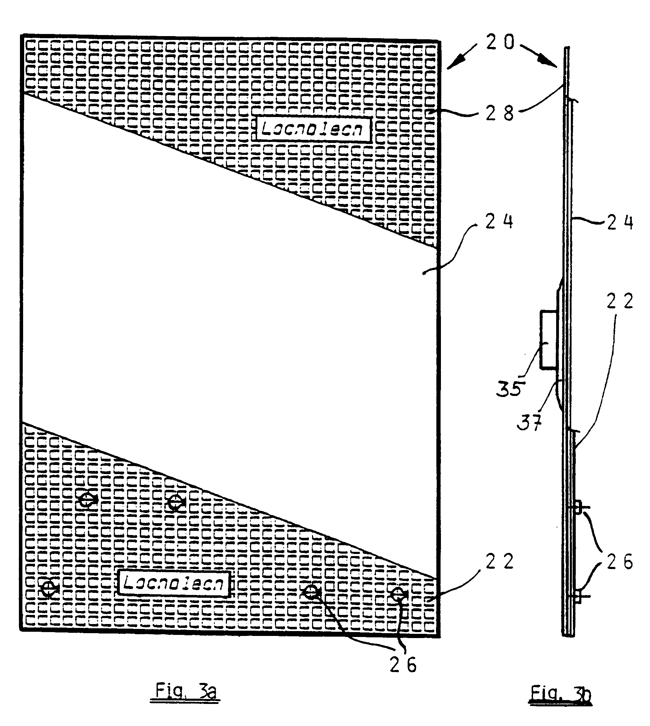

Die Figuren 1 und 2 zeigen einen Container 10, wie er in Zusammenhang mit der Erfindung verwendet wird. Dieser Container 10 besitzt Seitenwände 12, sowie eine Vorder- und eine Rückwand 16. Gemäß der Erfindung ist nun zumindest im Bereich einer Wand, insbesondere einer Seitenwand 12, eine Filtertafel 20 (vgl. auch Fig. 3a und 3b) angeordnet, die vorzugsweise mittels Handgriffen 30 in den Container 10 einsetzbar und aus diesem wieder entfernbar ist. An einer der Wände des Containers 10, vorzugsweise jedoch sowohl an der Vorderwand als auch der Rückwand 16 ist je eine Vibratoreinrichtung 42 angebracht, die den mittels einer Schlammpumpe aus dem Sandfangbecken eingefüllten Schlamm in Schwingungen versetzt, was die Ausscheidung des Wassers aus der Masse fördert.

Die Filtertafel 20 ermöglicht den seitlichen Abfluß der im Schlamm enthaltenen Flüssigkeit und beschleunigt die Entwässerung erheblich, so daß der Zustand einer stichfesten Masse wesentlich rascher als bei der bisherigen Schwerkraftabscheidung erreicht wird und neuer Schlamm in kürzeren Abständen in den Container 10 nachgefüllt werden kann.

Die Wand des Containers 10 ist hinter der Filtertafel 20 mit mindestens einem unteren Wasserablauf 34 versehen. Vorzugsweise ist jedoch ein weiterer Wasserablauf 32 etwa in halber Höhe des Containers 10 angeordnet.

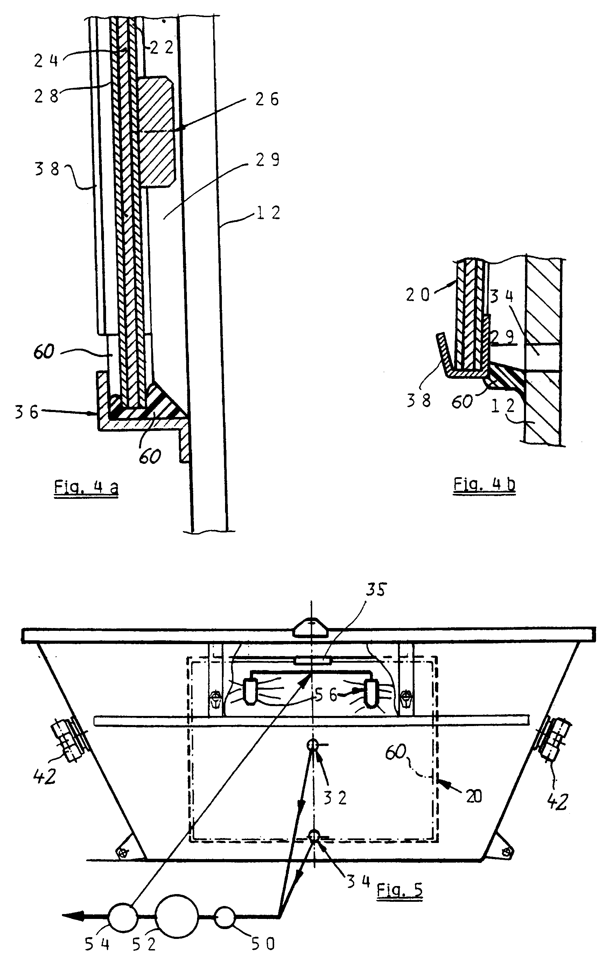

Einzelheiten der Filtertafel 20 und deren Anbringung im Container 10 ergeben sich aus den Figuren 3a,b und 4a,b.

Ein wesentlicher Bestandteil der Filtertafel 20 ist ein hinteres Lochblech 22, das zur Stützung des eigentlichen Feinfilters 24 dient und mit Öffnungen, beispielsweise in der Größenordnung von 2 cm Durchmesser versehen ist, so daß sich ein grobes Gitter ergibt, durch das das Abfließen von Wasser nicht behindert wird. Das Feinfilter 24 selbst ist derartig aufgebaut, daß es den größten Teil der Feststoffpartikel zurückhält, ohne jedoch zu schnell zu verstopfen. Vorzugsweise kann das Filter aus einer Kunststoffmatte, etwa aus Polypropylen mit einer Porengröße von 200 µm und einem Feinfilter etwa aus Vlies mit einer Porengröße von 30 µm bestehen, wobei das Feinfilter 24 am hinteren Lochblech 22 angebracht ist.

Die Stabilität der Filtertafel 20 kann vorzugsweise dadurch erhöht werden, daß auf der anderen Seite des Feinfilters 24 ein weiteres Lochblech 28 angebracht ist.

Von besonderer Bedeutung für die Erfindung ist die Anbringung von Distanzstücken 26 auf der freien Seite des Lochblechs 22 in einer derartigen Verteilung und Größe, daß einerseits ein genügender Abstand eingehalten wird, andererseits aber ein möglichst freier Abfluß des Wassers gegeben ist.

Wie insbesondere aus der Fig. 4a ersichtlich, ergibt sich hierdurch bei in den Container 10 eingesetzter Filtertafel 20 ein Zwischenraum 29 zwischen der Seitenwand 12 des Containers 10 und der Filtertafel 20, der ein Abfließen des Wassers aus dem Container 10 praktisch über die ganze Filterhöhe ermöglicht. Es sei darauf hingewiesen, daß alternativ zu dieser Lösung die Distanzstücke 26 auch an der Seitenwand 12 des Containers 10 angebracht werden könnten. Statt einer lokal begrenzten Klotzform kämen auch senkrechte Abstandsleisten in Frage.

Wie insbesondere aus den Figuren 4a und 4b ersichtlich, sind zur Halterung und Führung der Filtertafel 20 seitliche Führungswinkel 36 und ein horizontaler Auflagewinkel 38 vorgesehen, die ein einfaches Einsetzen, Halten und Entfernen der Filtertafel 20 mittels Handgriffen 30 gestatten.

In bevorzugter Weiterbildung der Erfindung ist die Oberkante der Filtertafel 20 etwa durch eine Kantenleiste 37 durchgehend versteift, an die vorzugsweise mittig ein weiterer Vibrator 35, bevorzugt von der Innenseite des Behälters her, angesetzt ist. Hierdurch wird die Filtertafel 20 noch zusätzlich zu den Schwingungen von der Vibratorvorrichtung 42 in Vibration versetzt und ihr Verblocken erheblich verzögert.

Es wird nun auf Fig. 5 Bezug genommen, die schematisch eine bevorzugte Ausführungsform des erfindungsgemäßen Systems darstellt. Insbesondere wird dabei veranschaulicht, daß das an den Wasserabläufen 32,34 anstehende Wasser über ein Vorfilter 50 von einer schmutzunempfindlichen Pumpe, vorzugsweise von einer Membranpumpe 52, laufend oder intermittierend abgezogen wird. Im Prinzip wird das Wasser der Waschanlage gegebenenfalls nach einer weiteren Reinigung wieder zugeführt. Erfindungsgemäß wird jedoch ein Teil des Wassers in einem Verteiler 54 abgezweigt und insbesondere Rotordüsen 56 zugeführt, die vorzugsweise im oberen Drittel des Filters unterhalb der Handgriffe 30 im Zwischenraum 29 (Fig. 4a) angeordnet sind und die Filtertafel 20 mit kräftigen Sprühstrahlen von der Rückseite her reinigen, so daß die Einsatzdauer der Filtertafel 20 erheblich verlängert werden kann.

Eine alternative Ausführung zu der Reinigung mit Düsen 56 besteht darin, den hinter der Filtertafel 20 gebildeten Zwischenraum 29 an den Außenkanten mit einer umlaufenden (Fig. 4a) Gummidichtung 60 abzudichten. Wird nun abgeschiedenes Wasser von der Verteileinrichtung 54 abgezweigt oder die Pumpe 52 kurzzeitig auf Reversierbetrieb geschaltet, so kann das in den Zwischenraum 29 unter Druck eintretende Wasser nur von der Rückseite der Filtertafel 20 durch das Lochblech 22, dann das Feinfilter 24 und das vordere Lochblech 28 austreten. Da hierbei der statische Wasserdruck des zu entwässernden Schlammes wirkt, ist ein Druck von mehreren bar zweckmäßig, der durch die Pumpe 52 aufzubringen ist. Bei dieser Fließrichtung von der Pumpe 52 zur Filtertafel 20, die entgegen der Entwässerungsfließrichtung verläuft, werden sich am Feinfilter 24 festsetzende Partikel losgelöst und somit dieses Feinfilter 24 freigehalten. Diese Umkehrung der Fließrichtung kann hierbei z. B. durch eine Zeitschaltuhr gesteuert pro Minute für einige Sekunden erfolgen.

Abschließend sei nochmals kurz die Arbeitsweise des erfindungsgemäßen Systems zusammengefaßt:

Über eine (nicht gezeigte) Schlammpumpe wird zu verfestigender Schlamm in entsprechenden Perioden in den Entwässerungscontainer 10 gefördert. Das sich aus dem Schlamm abscheidende Wasser gelangt durch die Filtertafel(n) 20 in den Zwischenraum 29 zwischen Filtertafel 20 und Seitenwand 12, sammelt sich dort und wird von der Pumpe 52 über die Wasserabläufe 32,34 abgezogen, so daß sich ein rasche Entwässerung ergibt. Die Wasserabscheidung wird durch die Vibratoreinrichtung 42 erheblich beschleunigt sowie ebenfalls die Filtertafel 20 in leichte Schwingungen versetzt, so daß sich deren Verstopfungsgefahr verringert und feinere Filtereinsätze verwendet werden können. Der weitere Vibrator 35 kann die ganze Filtertafel 20 zusätzlich in Schwingungen versetzen, so daß sich das Filter verstopfende Teilchen lösen und eine Verblockungsgefahr erheblich verringert wird. Das abgezogene Wasser wird von der Pumpe 52 zu einem größeren Teil, etwa zu 2/3 wieder der Waschanlage zugeführt, während 1/3 vom Verteiler 54 beispielsweise zu den Rotordüsen 56 oder zum abgedichteten Zwischenraum abgezweigt wird, so daß die Filtertafel 20 von ihrer Rückseite her insbesondere in ihrem oberen Teil gereinigt wird. Bis zur nächsten Schlammzufuhr ist soviel Wasser abgeflossen, daß praktisch die gewünschte stichfeste Masse vorliegt. Der Vorgang wiederholt sich nun in einer nächsten Schicht von Klärschlamm, so daß sich der Container 10 schichtenweise mit der stichfesten Masse füllt. Der Container 10 wird dann in üblicher Weise entsorgt. Die Filtertafel 20 wird aus dem Container 10 entfernt, gereinigt und zur Wiederverwendung in einen weiteren Container 10 eingesetzt.

## Patentansprüche

1. Schlammentwässerungssystem, insbesondere für Autowaschanlagen, mit einem Container (10), in dem sich Feststoffpartikel absetzen und das sich abscheidende Wasser abgeführt wird, wobei an mindestens einer Seitenwand (12) des Containers (10) in geringem Abstand eine Filtertafel (20) angeordnet ist und der zwischen der Seitenwand (12) und der Filtertafel (20) gebildete Zwischenraum (29) zumindest im unteren Bereich mit mindestens einem Wasserablauf (32, 34) versehen ist, sowie zur Verbesserung der Entwässerung eine Vibratoreinrichtung vorgesehen ist, dadurch gekennzeichnet, daß
die Vibratorvorrichtung (42) an mindestens einer Seitenwand (12, 16) angebracht ist.

2. System nach Anspruch 1, dadurch gekennzeichnet, daß der Zwischenraum (29) durch Abstandselemente (26) eingehalten wird, die entweder auf der Rückseite der Filtertafel (20) oder an der Innenseite der Seitenwand (12) verteilt angebracht sind.

3. System nach Anspruch 1 oder 2, dadurch gekennzeichnet, daß die Rückseite und die Vorderseite der Filtertafel (20) durch je ein Lochblech (22, 28) oder Gitter gebildet wird, die ein dazwischen angeordnetes Feinfilter (24) abstützen.

4. System nach einem der vorhergehenden Ansprüche, dadurch gekennzeichnet, daß die Filtertafel (20) mit mindestens einem Handgriff (30) versehen ist.

5. System nach einem der vorhergehenden Ansprüche, dadurch gekennzeichnet, daß ein weiterer Wasserablauf (32) in etwa halber Höhe des Containers (10) im Bereich der Filtertafel (20) vorgesehen ist.

6. System nach einem der vorhergehenden Ansprüche, dadurch gekennzeichnet, daß zum Abpumpen des abgefilterten Wassers aus dem Zwischenraum (29) eine Pumpe (52) vorgesehen ist.

7. System nach Anspruch 6, dadurch gekennzeichnet, daß der Pumpe (52) eine Verteileinrichtung (54) zur Abzweigung von abgefiltertem Wasser zu Düsen (56) nachgeschaltet ist, die im Zwischenraum (29) zur Reinigung der Filtertafel (20) von der Rückseite her vorgesehen sind.

8. System nach Anspruch 6 oder 7, dadurch gekennzeichnet, daß der Pumpe (52) ein Filter (50) vorgeschaltet ist.

9. System nach einem der vorhergehenden Ansprüche, dadurch gekennzeichnet, daß an der Filtertafel (20), vorzugsweise an einer versteiften Oberkante (37), ein weiterer Vibrator (35) angesetzt ist.

10. System nach einem der Ansprüche 1 bis 9, dadurch gekennzeichnet, daß die Filtertafel (20) mit dem abgeschiedenen Wasser laufend oder intermittierend unter Druck beaufschlagt ist.

11. System nach Anspruch 10, dadurch gekennzeichnet, daß die Filtertafel (20) seitlich mit Gummidichtungen (60) unter Bildung eines geschlossenen Zwischenraums (29) abgedichtet ist und zur Reinigung der Filtertafel (20) die Filtertafel (20) mit dem abgeschiedenen Wasser von der Rückseite her in zur Entwässerungsfließrichtung entgegengesetzter Richtung beaufschlagt ist.

## Claims

1. A sludge dewatering system, in particular for car washing plants, having a container (10) in which solid particles settle and the separating water is drained off, wherein at least one side wall (12) of the container (10) comprises a filter screen (20) provided in proximity therewith and the interspace (29) formed between said side wall (12) and said filter screen (20) is provided with at least one water drain (32, 34), at least in its lower portion, and a vibrator means is provided for improving the drainage, characterized in that
the vibrator means (42) is attached to at least one side wall (12, 16).

2. The system of claim 1, characterized in that said interspace (29) is maintained by spacing elements (26) mounted in a distributed arrangement to either the rear side of said filter screen (20) or the interior side of said side wall (12).

3. The system of either claim 1 or claim 2, characterized in that the rear side and the front side of said filter screen (20) each are formed by perforated sheets (22, 28) or meshes supporting an intermediate fine-mesh filter (24).

4. The system of any of the preceding claims, characterized in that said filter screen (20) is provided with at least one handle (30).

5. The system of any of the preceding claims, characterized in that a further water drain (32) is provided about half the height of said container (10) in the filter screen (20) portion.

6. The system of any of the preceding claims, characterized in that a pump (52) is provided for pumping out the water filtered-off from said interspace (29).

7. The system of claim 6, characterized in that a distribution means (54) is coupled to the outside of said pump (52) for branching the filtered water toward nozzles (56) provided in said interspace (29) for cleaning said filter screen (20) from the rear side thereof.

8. The system of either claim 6 or claim 7, characterized in that a filter (50) is connected in series with said pump (52).

9. The system of any of the preceding claims, characterized in that a further vibrator (35) is fastened to said filter screen (20), preferably at a stiffened top edge (37) thereof.

10. The system of any of claims 1 to 9, characterized in that said filter screen (20) is permanently or intermittently pressure-loaded by the separated water.

11. The system of claim 10, characterized in that said filter screen (20) is sealed at its sides by means of rubber gaskets (60) forming a closed interspace (29), and that for cleaning the filter screen (20), the filter screen (20) is loaded with the separated water from its rear side in opposite direction to the drainage flow direction.

## Revendications

1. Système pour assécher les boues, notamment pour installations de lavage de voitures, comprenant une cuve (10) dans laquelle les particules solides se déposent et l'eau se séparant est évacuée, sachant que sur au moins une paroi latérale (12) de la cuve (10), à faible distance de celle-ci, est disposé un panneau filtrant (20), que l'intervalle (29) formé entre la paroi latérale (12) et le panneau filtrant (20) est muni dans la partie inférieure d'au moins un écoulement d'eau (32, 34), et qu'un dispositif vibrant est prévu pour améliorer l'assèchement, caractérisé en ce que le dispositif vibrant (42) est fixé sur au moins une paroi latérale (12, 16).

2. Système selon la revendication 1, caractérisé en ce que l'intervalle (29) est maintenu par des écarteurs (26) qui sont fixés soit sur l'arrière du panneau filtrant (20), soit sur la face intérieure de la paroi latérale (12).

3. Système selon la revendication 1 ou 2, caractérisé en ce que l'arrière et l'avant du panneau filtrant (20) sont chaque fois formés par une tôle perforée (22, 28) ou une grille qui supportent un filtre fin (24) intercalé entre les deux.

4. Système selon l'une des revendications précédentes, caractérisé en ce que le panneau filtrant (20) est muni d'au moins une poignée (30).

5. Système selon l'une des revendications précédentes, caractérisé en ce qu'un écoulement d'eau supplémentaire (32) est prévu dans la zone du panneau filtrant (20), approximativement à mi-hauteur de la cuve (10).

6. Système selon l'une des revendications précédentes, caractérisé en ce qu'une pompe (52) est prévue pour évacuer l'eau filtrée de l'intervalle (29).

7. Système selon la revendication 6, caractérisé en ce qu'un dispositif de répartition (54) pour dériver l'eau filtrée vers des buses (56) est monté en aval de la pompe (52), buses qui sont prévues dans l'intervalle (29) afin de nettoyer le panneau filtrant (20) par l'arrière.

8. Système selon la revendication 6 ou 7, caractérisé en ce qu'un filtre (50) est monté en amont de la pompe (52).

9. Système selon l'une des revendications précédentes, caractérisé en ce qu'un vibrateur supplémentaire (35) est monté sur le panneau filtrant (20), de préférence sur une arête supérieure renforcée (37).

10. Système selon l'une des revendications 1 à 9, caractérisé en ce que le panneau filtrant (20) est sollicité en continu ou de façon intermittente par l'eau séparée qui est mise sous pression.

11. Système selon la revendication 10, caractérisé en ce que le panneau filtrant (20) est étanché latéralement par des joints en caoutchouc (60) en formant un intervalle fermé (29) et est sollicité par l'eau séparée depuis la face arrière, dans le sens opposé au sens de circulation pour l'assèchement, afin de nettoyer le panneau filtrant (20).
